# EUROPEAN PATENT APPLICATION

(11) **EP 4 750 161 A1**
(43) Date of publication of application: **27.05.2026**
(21) Application number: 24856328.0
(22) Date of filing: 08.08.2024
(51) Int. Cl.: H04W 48/16, G06F 18/26, H04W 28/00

(54) **COMMUNICATION METHOD, USER EQUIPMENT, AND NETWORK NODE**

(30) Priority: 18.08.2023 JP 2023133595
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/028544
(87) International publication number: WO 2025/041637

(57) **Abstract**

A communication method used in a mobile communication system includes performing, at a user equipment, wireless communication with a network node using one or more network slices and transmitting, at the user equipment, slice-related information used for performing mobility control of the user equipment to the network node. The slice-related information includes at least one selected from the group consisting of first information indicating a use probability of each of the network slices, second information indicating a priority of each of the network slices, and third information indicating a traffic pattern of each of the network slices.

## Description

### TECHNICAL FIELD

The present disclosure relates to a communication method, a user equipment, and a network node used in a mobile communication system.

### BACKGROUND OF INVENTION

In the Third Generation Partnership Project (3GPP) (trade name; the same applies hereinafter), which is a standardization project for mobile communication systems, applying an artificial intelligence or machine learning (also referred to as artificial intelligence (AI)/machine learning (ML)) technology to an air interface in a mobile communication system has been studied.

### CITATION LIST

### NON-PATENT LITERATURE

Non-Patent Document 1: 3GPP Technical Report: TR 38.843 V0.1.0 (2023-05), "Study on Artificial Intelligence (Al)/Machine Learning (ML) for NR air interface (Release 18)"

### SUMMARY

In a first aspect, a communication method is a method used in a mobile communication system. The communication method includes: performing, at a user equipment, wireless communication with a network node using one or more network slices; and transmitting, at the user equipment, slice-related information used for performing mobility control of the user equipment to the network node. The slice-related information includes at least one selected from the group consisting of first information indicating a use probability of each of the network slices, second information indicating a priority of each of the network slices, and third information indicating a traffic pattern of each of the network slices.

In a second aspect, a user equipment is equipment used in the mobile communication system. The user equipment includes: a controller configured to perform wireless communication with a network node using one or more network slices; and a transmitter configured to transmit slice-related information used for performing mobility control of the user equipment to the network node. The slice-related information includes at least one selected from the group consisting of first information indicating a use probability of each of the network slices, second information indicating a priority of each of the network slices, and third information indicating a traffic pattern of each of the network slices.

In a third aspect, a network node is a node used in the mobile communication system. The network node includes: a controller configured to perform wireless communication with a user equipment using one or more network slices; and a receiver configured to receive, from the user equipment, slice-related information used for performing mobility control of the user equipment. The slice-related information includes at least one selected from the group consisting of first information indicating a use probability of each of the network slices, second information indicating a priority of each of the network slices, and third information indicating a traffic pattern of each of the network slices.

In a fourth aspect, a network node is a node used in the mobile communication system. The network node includes a communicator configured to transmit slice load information indicating a load status of each of the network slices to another network node. The slice load information includes at least one selected from the group consisting of information on the number of user equipments in a radio resource control (RRC) connected state, information on the number of user equipments that are in the radio resource control (RRC) connected state and are active, and information on a communication load for each of the network slices per user equipment.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (network node) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a functional block configuration of an AI/ML technology in the mobile communication system according to an embodiment.
FIG. 7 is a diagram for describing an overview of a network slicing technology.
FIG. 8 is a diagram for describing an example of an operation scenario for the mobile communication system according to the embodiment.
FIG. 9 is a diagram for describing a first operation pattern of the mobile communication system according to the embodiment.
FIG. 10 is a diagram illustrating an example of the first operation pattern of the mobile communication system according to the embodiment.
FIG. 11 is a diagram for describing a second operation pattern of the mobile communication system according to the embodiment.
FIG. 12 is a diagram illustrating an example of the second operation pattern of the mobile communication system according to the embodiment.

### DESCRIPTION OF EMBODIMENTS

As a use case of the AI/ML technology, mobility control (e.g., handover control) for a user equipment is conceivable. For example, on the premise of the network slicing technology, a network node determining a target cell of a handover of the user equipment by model inference may allow the target cell to be more appropriately determined in consideration of network slices. However, a technique for implementing such AI/ML-based mobility control in combination with the network slicing technology has not been established.

The present disclosure provides for facilitating performing the AI/ML based mobility control in consideration of the network slices.

According to an embodiment, a mobile communication system is described with reference to the drawings. In the description of the drawings, the same or similar parts are denoted by the same or similar reference signs.

### (1) Configuration of Mobile Communication System

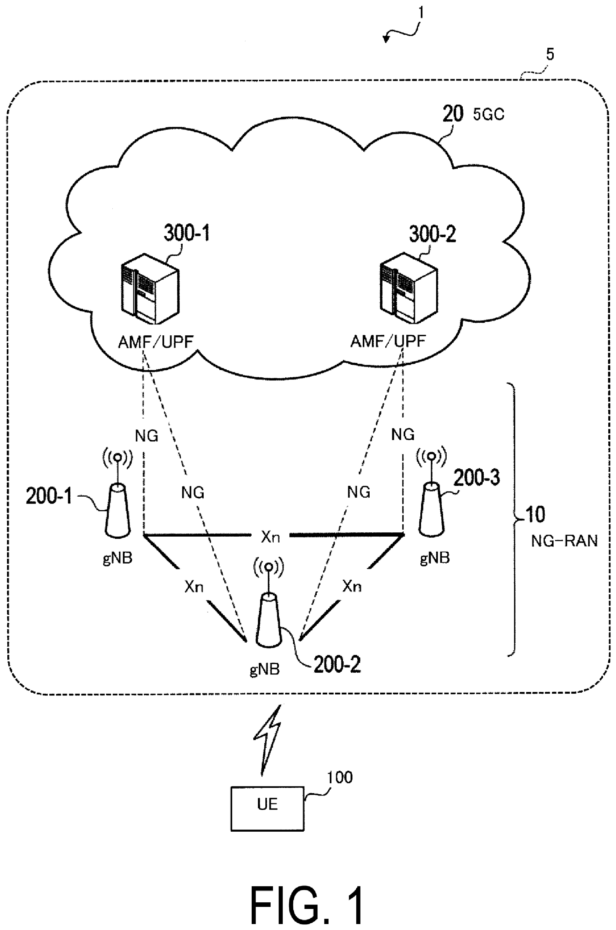

First, a configuration of a mobile communication system according to an embodiment is described. FIG. 1 is a diagram illustrating a configuration of a mobile communication system 1 according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1. The UE 100 performs wireless communication with the network 5.

The UE 100 is a mobile wireless communication apparatus. The UE 100 may be any apparatus as long as the UE 100 is used by a user. Examples of the UE 100 include a mobile phone terminal (which may be a smartphone) or a tablet terminal, a notebook PC, a communication module (which may be a communication card or a chipset), a sensor or an apparatus provided on the sensor, a vehicle or an apparatus (Vehicle UE) provided on the vehicle, and a flying object or an apparatus (Aerial UE) provided on the flying object.

The NG-RAN 10 includes base stations 200 (also referred to as "gNBs" or "NG-RAN nodes" in 5G systems), which are a type of network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

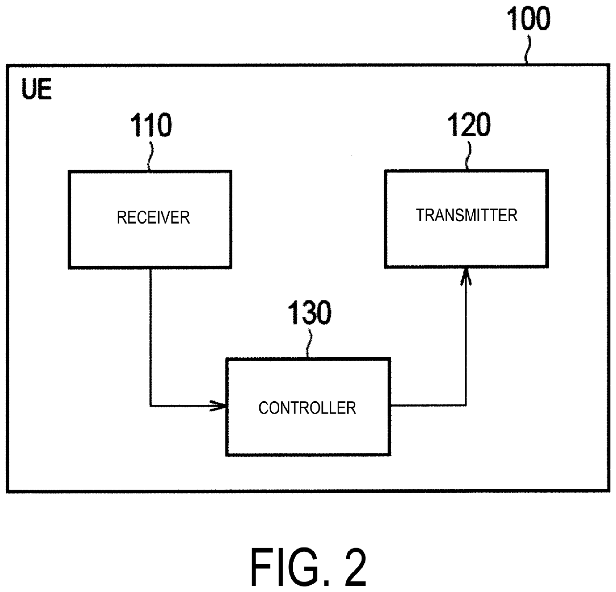

FIG. 2 is a diagram illustrating a configuration of the UE 100 (the user equipment) according to an embodiment. The UE 100 includes a receiver 110, a transmitter 120, and a controller 130. The receiver 110 and the transmitter 120 constitute a communicator that performs wireless communication with the gNB 200. The UE 100 is an example of the communication apparatus.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. The operations of the UE 100 described above and to be described below may also be an operation under the control of the controller 130. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

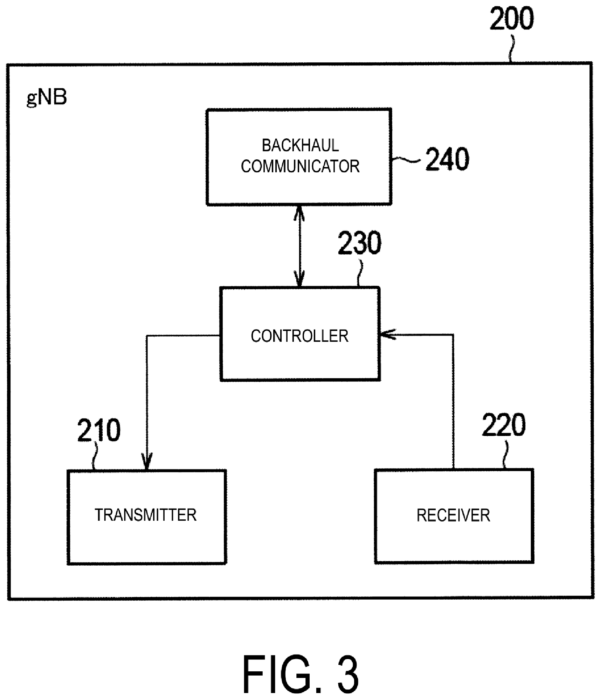

FIG. 3 is a diagram illustrating a configuration of the gNB 200 (network node) according to an embodiment. The gNB 200 includes a transmitter 210, a receiver 220, a controller 230, and a backhaul communicator 240. The transmitter 210 and the receiver 220 constitute a communicator that performs wireless communication with the UE 100. The backhaul communicator 240 constitutes a network communicator that performs communication with the CN 20. The gNB 200 is another example of the communication apparatus.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the gNB 200. The operations of the gNB 200 described above and below may also be performed under the control of the controller 130. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a central unit (CU) and a distributed unit (DU) (i.e., functions are divided), and the two units may be connected via an F1 interface, which is a fronthaul interface.

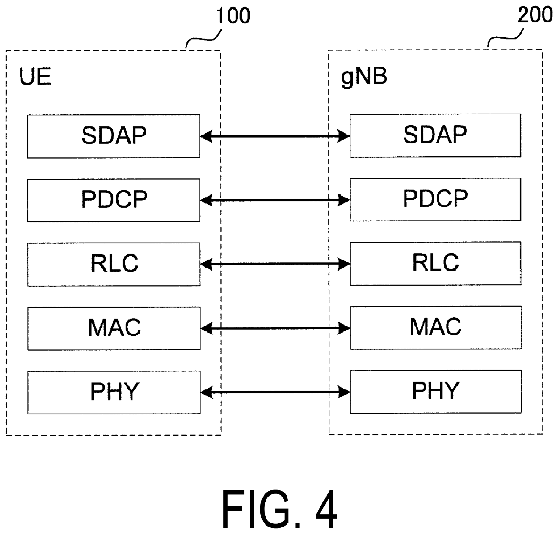

FIG. 4 is a diagram illustrating a configuration of a protocol stack of a radio interface of a user plane handling data.

The user plane radio interface protocol includes a physical (PHY) layer, a medium access control (MAC) layer, a radio link control (RLC) layer, a packet data convergence protocol (PDCP) layer, and a service data adaptation protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the gNB 200 is appended with Cyclic Redundancy Code (CRC) parity bits scrambled by the RNTI.

In NR, the UE 100 can use a bandwidth narrower than a system bandwidth (i.e., a cell bandwidth). The gNB 200 configures a bandwidth portion (BWP) consisting of consecutive Physical Resource Blocks (PRBs) for the UE 100. The UE 100 transmits and receives data and control signals in an active BWP. For example, up to four BWPs may be configurable for the UE 100. Each BWP may have a different subcarrier spacing. Frequencies of the BWPs may overlap with each other. When a plurality of BWPs are configured for the UE 100, the gNB 200 can designate which BWP to apply by controlling the downlink. By doing so, the gNB 200 dynamically adjusts the UE bandwidth according to an amount of data traffic in the UE 100 or the like to reduce the UE power consumption.

The gNB 200 can configure, for example, up to three control resource sets (CORESETs) for each of up to four BWPs on a serving cell. The CORESET is a radio resource for control information to be received by the UE 100. Up to 12 or more CORESETs may be configured for the UE 100 on the serving cell. Each CORESET may have an index of 0 to 11 or more. A CORESET may include 6 resource blocks (PRBs) and one, two or three consecutive Orthogonal Frequency Division Multiplex (OFDM) symbols in the time domain.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between IP flows, which are units for Quality of Service (QoS) control by the core network, and radio bearers, which are units for QoS control by the Access Stratum (AS). Note that, when the RAN is connected to the EPC, the SDAP need not be provided.

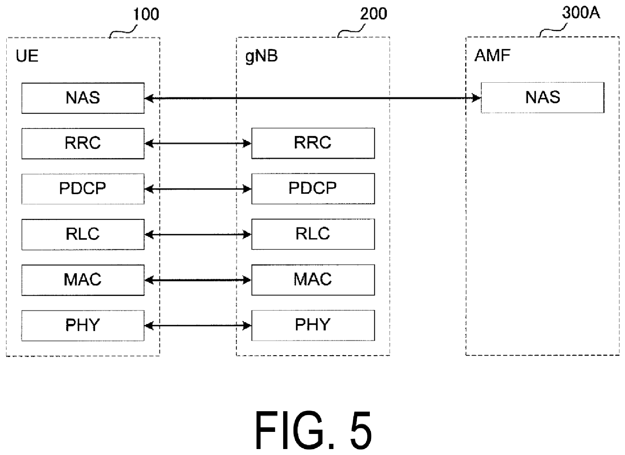

FIG. 5 is a diagram illustrating a configuration of a protocol stack of a radio interface of a control plane handling signaling (a control signal).

The protocol stack of the radio interface of the control plane includes a radio resource control (RRC) layer and a Non-Access Stratum (NAS) instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS, which is located above the RRC layer, performs session management, mobility management, and the like. NAS signaling is transmitted between the NAS of the UE 100 and the NAS of the AMF 300A. The UE 100 includes an application layer other than the protocol of the radio interface. A layer lower than the NAS is referred to as an Access Stratum (AS).

### (2) Overview of AI/ML Technology

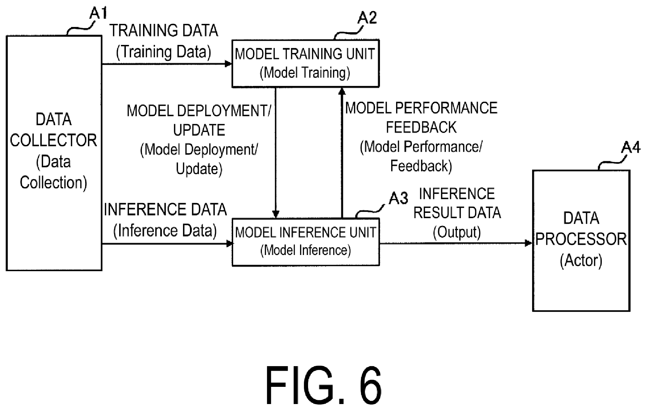

An overview of the AI/ML technology is described. FIG. 6 is a diagram illustrating a functional block configuration of the AI/ML technology in the mobile communication system 1 according to an embodiment.

The functional block configuration illustrated in FIG. 6 includes a data collector A1, a model training unit A2, a model inference unit A3, and a data processor A4.

The data collector A1 collects input data, specifically, training data and inference data, and outputs the training data to the model training unit A2 and outputs the inference data to the model inference unit A3. The data collector A1 may acquire data in the apparatus in which the data collector A1 is provided, as input data. The data collector A1 may acquire, as the input data, data in another apparatus.

The model training unit A2 performs model training (also referred to as "learning processing"). To be specific, the model training unit A2 optimizes parameters for the training model (hereinafter also referred to as a "model" or an "AI/ML model") by machine learning using the training data, derives (generates or updates) a trained model, and outputs the trained model to the model inference unit A3. The model is data-driven algorithm in which a set of outputs is generated based on a set of inputs through application of the AI/ML technology. For example, considering y = ax + b, a (slope) and b (intercept) are the parameters, and optimizing these parameters corresponds to the machine learning. In general, machine learning includes supervised learning, unsupervised learning, and reinforcement learning. Supervised learning is a method of using correct answer data for the training data. Unsupervised learning is a method of not using correct answer data for the training data. For example, in unsupervised learning, feature points are learned from a large amount of training data, and correct answer determination (range estimation) is performed. The reinforcement learning is a method of assigning a score to an output result and learning a method of maximizing the score.

The model inference unit A3 performs model inference (also referred to as "inference processing"). To be specific, the model inference unit A3 infers an output from the inference data by using the trained model, and outputs inference result data to the data processor A4. For example, considering y = ax + b, x is the inference data and y corresponds to the inference result data. Note that "y = ax + b" is a model. A model in which a slope and an intercept are optimized, for example, "y = 5x + 3" is a trained model. Here, various techniques for the model are used, such as linear regression analysis, neural network, and decision tree analysis. The above "y = ax + b" can be considered as a kind of the linear regression analysis. The model inference unit A3 may perform model performance feedback to the model training unit A2.

The data processor A4 receives the inference result data and performs processing that utilizes the inference result data.

### (3) Overview of Network Slicing Technology

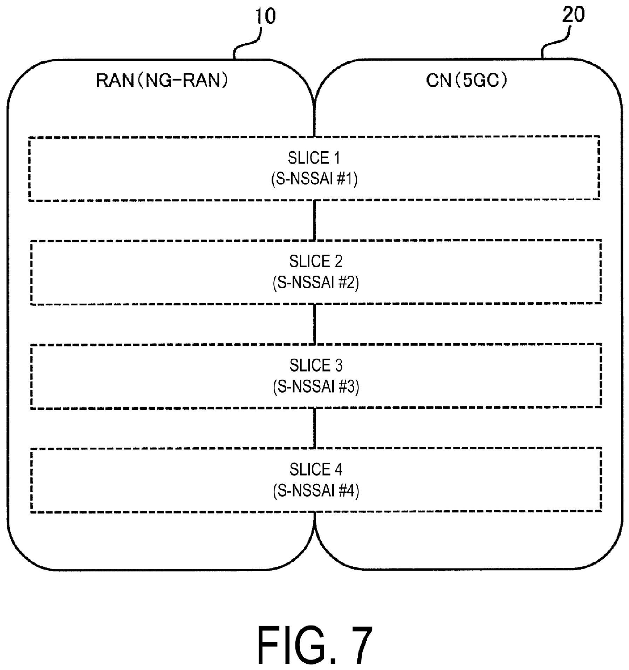

An overview of the AI/ML Technology is described. FIG. 7 is a diagram for describing the overview of the network slicing technology.

In the network slicing, the network 5 is logically divided to configure network slices (hereinafter, also simply referred to as "slices"). Each slice corresponds to a different service requirement. In the illustrated example, the network 5 has four slices (slices 1 to 4).

A network slice includes a RAN part and a CN part. Support for the network slicing is based on the principle that traffic of different slices is handled by different protocol data unit (PDU) sessions. The network 5 can implement various network slices by scheduling and by providing different layer 1/layer 2 (L1/L2) configurations.

Each network slice is uniquely identified by Single Network Slice Selection Assistance Information (S-NSSAI). Note that the NSSAI includes one piece of or a list of S-NSSAI. The S-NSSAI has a mandatory Slice/Service Type (SST) field for identifying a slice type and an optional Slice Differentiator (SD) field for distinguishing between slices having the same SST field.

When the NSSAI is provided by the NAS, the UE 100 provides the NSSAI for network slice selection to the network 5 (NG-RAN 10/gNB 200) in an RRC Setup Complete message. The network 5 can support a large number of slices, but the UE 100 does not need to support more than eight slices simultaneously. The NG-RAN 10 supports selection of the RAN part of the network slice by the NSSAI provided by UE 100 or the 5GC 20. Note that one gNB 200 (NG-RAN node) can support a plurality of slices.

The NG-RAN 10 may support resource isolation between slices and dedicate NG-RAN resources to a certain slice. Some random access channel (RACH) resources are associated with a specific network slice AS group (NSAG). The NSAG identifies an association to a slice or set of slices. That is, the NSAG indicates a slice group consisting of at least one slice. The NSAG is defined within a tracking area (TA) and is used for slice-based cell reselection and/or slice-based random access (slice-based RACH configuration).

### (4) Operation of Mobile Communication System

In an embodiment, operations of the mobile communication system 1 are described. In the embodiment, the AI/ML technology is applied to the mobility control for the UE 100. Specifically, in the embodiment, the AI/ML technology is applied to cell switching from the source cell to the target cell, in particular, switching of the serving cell for the UE 100. As an example, the embodiment mainly describes a handover for switching a primary cell (PCell) for the UE 100 under initiative of an RRC layer when the UE 100 is in an RRC connected state.

The cell switching when the UE 100 is in the RRC connected state includes, in addition to the handover, PSCell change for switching a primary-secondary cell (PSCell) for the UE 100 under initiative of the RRC layer, and an L1/L2 Triggered Mobility (LTM) which is cell switching under initiative of the layer 1 and/or the layer 2 (L1/L2). Although the embodiment mainly describes an example of applying the AI/ML technology to the handover, the AI/ML technology may be applied to the LTM or the PSCell change. In other words, the "handover" described below may be read as the "LTM" or the "PSCell change". Note that in the LTM, for example, the gNB 200 configures one or more candidate cells for the UE 100 in advance in an RRC message, the UE 100 reports a cell measurement result to the gNB 200 in the L1, the gNB 200 instructs, to the UE 100, the cell switching to the target cell in a MAC control element (CE), and the UE 100 accesses the target cell in response to the instruction.

The handover includes a normal handover (also referred to as the "HO") and a conditional handover (CHO). In the normal handover, the UE 100 transmits a Measurement Report message, which is a type of RRC message, to the gNB 200, the gNB 200 determines a target cell based on the Measurement Report message, the gNB 200 instructs to the UE 100 a handover to the target cell in the RRC message, and the UE 100 accesses the target cell in response to the instruction. In contrast, in the conditional handover, the gNB 200 configures one or more candidate cells together with an execution condition for handover for the UE 100 in advance in the RRC message, the UE 100 evaluates whether the execution condition for handover to any candidate cell is satisfied, and the UE 100 determines the candidate cell that the execution condition for handover is satisfied as a target cell and accesses the target cell. Note that a cell determined to be accessed by the UE 100 is referred to as a target cell, and a cell that is a candidate for the target cell is referred to as a candidate cell, but the terms "target cell" and "candidate cell" may be used as synonymous terms in the following description.

From the viewpoint of the network 5, the handover includes an intra-gNB (intra-CU) handover in which the source cell and the target cell belong to the same gNB (CU) and an inter-gNB (inter-CU) handover in which the source cell and the target cell belong to different gNBs (CUs). In the embodiments, the inter-gNB handover is mainly assumed, but the intra-gNB handover may also be assumed.

Further, the embodiment below mainly describes an example in which AI/ML-related signaling related to the AI/ML technology is an RRC message that is signaling of an RRC layer (that is, the layer 3). However, the AI/ML-related signaling may a MAC CE that is signaling of a MAC layer signaling (that is, the layer 2) or downlink control information (DCI) and/or uplink control information (UCI) that are/is signaling of a PHY layer signaling (that is, the L1). The downlink AI/ML-related signaling may be UE individual signaling (dedicated signaling) or broadcast signaling (e.g., system information block (SIB)). The AI/ML-related signaling may be signaling in a new layer (e.g., an AI/ML layer) dedicated to artificial intelligence or machine learning.

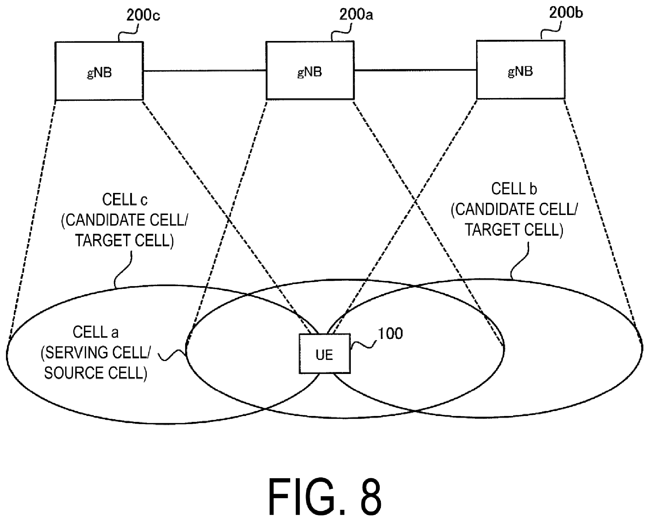

FIG. 8 is a diagram for describing an example of an operation scenario for the mobile communication system 1 according to the embodiment.

In the illustrated example, the UE 100 is in the RRC connected state with a cell a managed by a gNB 200a being the serving cell. In other words, the UE 100 establishes an RRC connection to the gNB 200a and is in wireless communication with the gNB 200a. Neighboring cells of the cell a include cells b and c. The cell b is managed by a gNB 200b, and the cell c is managed by a gNB 200c. The gNB 200a is communicably connected to the gNB 200b and the gNB 200b via an inter-node interface (Xn interface).

In response to the UE 100 moving, the handover of the UE 100 needs to be executed from the cell a to the neighboring cell. In the illustrated example, the neighboring cells are cell b and cell c, and the cells b and c are candidate cells for handover.

For the normal handover, the UE 100 transmits a Measurement Report message, which is a type of RRC message, to the gNB 200, the gNB 200 determines any one of the cells b and c as a target cell based on the Measurement Report message, the gNB 200 instructs to the UE 100 a handover to the target cell in the RRC message, and the UE 100 accesses the target cell in response to the instruction.

For the conditional handover, the gNB 200 configures one or more candidate cells (cells b and c) together with an execution condition for handover for the UE 100 in advance in the RRC message, the UE 100 evaluates whether the execution condition for handover to any candidate cell is satisfied, and the UE 100 determines the candidate cell that the execution condition for handover is satisfied as a target cell and accesses the target cell.

In such a handover (a normal handover and a conditional handover), when the target cell (target gNB) does not support the network slice that is being used or is to be used by the UE 100, a problem such as service interruption may occur. Even if the target cell (target gNB) supports the network slice that is being used by the UE 100, the required quality of service may not need to be satisfied when the target cell (target gNB) runs short of resources for the network slice at the time of handover.

Here, the gNB 200a determining the target cell (target gNB) of the handover of the UE 100 by the model inference may allow the target cell to be more appropriately determined in consideration of the network slices. The embodiment describes a first operation pattern and a second operation pattern of the mobile communication system 1 for facilitating performing the AI/ML based mobility control in consideration of the network slices.

### (4.1) First Operation Example

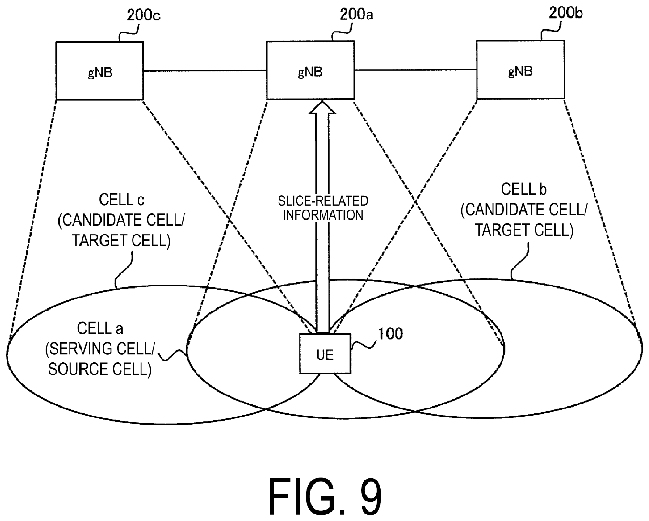

FIG. 9 is a diagram for describing the first operation pattern of the mobile communication system 1 according to the embodiment.

The UE 100 is in the RRC connected state with the cell a managed by the gNB 200a being the serving cell. The UE 100 performs wireless communication with the gNB 200a using one or more network slices. In the first operation pattern, the UE 100 transmits slice-related information used for performing the mobility control of the UE 100 to the gNB 200. The slice-related information includes at least one selected from the group consisting of first information indicating a use probability of each of the network slices, second information indicating a priority of each of the network slices, and third information indicating a traffic pattern of each of the network slices. That is, the UE 100 notifies the gNB 200a of at least one selected from the group consisting of the use probability of each slice, the priority of each slice, and the traffic pattern (resource occupancy) of each slice.

This enables the gNB 200a (source gNB) to appropriately determine the target cell (target gNB) in consideration of the network slices based on the slice-related information provided from the UE 100.

The UE 100 that performs such an operation includes a controller 130 configured to performs wireless communication with the gNB 200a using one or more network slices and a transmitter 120 configured to transmit the slice-related information used for performing the mobility control of the UE 100 to the gNB 200a. On the other hand, the gNB 200a includes a controller 230 configured to performs wireless communication with the UE 100 using one or more network slices and a receiver 220 configured to receive, from the UE 100, the slice-related information used for performing the mobility control of the UE 100.

In the first operation pattern, the UE 100 may receive signaling for requesting or configuring transmission of the slice-related information from the gNB 200. The UE 100 may transmit the slice-related information to the gNB 200a in response to the signaling.

In the first operation pattern, the UE 100 may derive at least one selected from the group consisting of the first information, the second information, and the third information by statistical processing based on a track record of the UE 100 having used each of the network slices.

In the first operation pattern, the UE 100 may derive at least one selected from the group consisting of the first information, the second information, and the third information by inference processing (model inference) based on a track record of the UE 100 having used each of the network slices by using an artificial intelligence or machine learning (AI/ML) model. Here, the AI/ML model may be a trained model that has been trained for the track record of the UE 100 having used each of the network slices.

In the first operation pattern, at least one selected from the group consisting of the first information, the second information, and the third information may be information in an S-NSSAI unit or information in an NSAG unit.

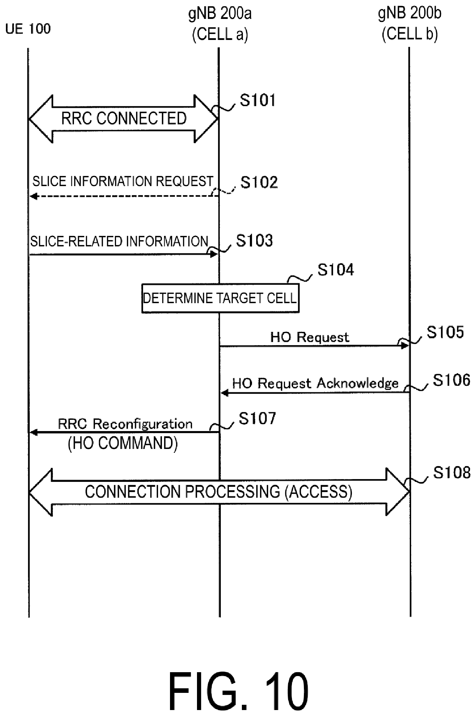

FIG. 10 is a diagram illustrating an example of the first operation pattern of the mobile communication system 1 according to the embodiment. Note that the gNB 200a may be provided with, from the AMF 300A, information on a network slice that the UE 100 is allowed to use (for example, Allowed NSSAI or Configured NSSAI).

In step S101, the UE 100 is in the RRC connected state with the cell a managed by the gNB 200a being the serving cell. The UE 100 performs wireless communication with the cell a (gNB 200a) using one or more network slices.

In step S102, the gNB 200a may transmit a transmission configuration or a transmission request for the slice-related information (also referred to as a "slice information request") to the UE 100. The UE 100 receives the slice information request.

The gNB 200a may transmit an RRC Reconfiguration message, which is a type of RRC message, including the slice information request to the UE 100. The RRC Reconfiguration message may include a measurement configuration for configuring measurements and measurement report for handover for the UE 100. That is, the gNB 200 may transmit the slice information request along with the measurements configuration to the UE 100. The slice information request may be included in the measurement configuration.

The gNB 200 may include information indicating a network slice intended for the slice-related information (or a network slice not intended for the slice-related information) in the slice information request. The information may be a list of S-NSSAI or a list of NSAGs.

The gNB 200 may include information indicating a type of slice-related information requested from the UE 100 in the slice information request. For example, the gNB 200 may include information indicating a type of information to be derived and transmitted by the UE 100 among the first information to the third information, in the slice information request.

When the gNB 200 requests a statistical value based on the past history (track record) from the UE 100, the gNB 200 may include information indicating an intended period (for example, the past one day) in the slice information request.

When the gNB 200 requests a future predicted value using the model inference from the UE 100, the gNB 200 may include identification information (model ID or functional ID) of the AI/ML model used for the model inference in the slice information request. Alternatively, the gNB 200 may include the AI/ML model itself in the slice information request.

In step S103, the UE 100 transmits the slice-related information to the gNB 200a. The gNB 200a receives the slice-related information. The UE 100 may transmit a Measurement Report message or a UE Assistance Information message, which a type of RRC message, including the slice-related information to transmit to the gNB 200a. The slice-related information includes at least one piece of information selected from the group consisting of the first to third information described below.

1) Information indicating a use probability of each network slice (first information): The first information may include, for each network slice, S-NSSAI indicating the network slice and information indicating a probability that the UE 100 uses the network slice. For example, the first information may be information such as S-NSSAI #1: 30%, S-NSSAI #2: 15%, S-NSSAI #3: 60%, .... However, the information indicating the probability may be an index indicating the probability instead of the probability value. For example, the first information may be information such as S-NSSAI #1: high probability (high), S-NSSAI #2: low probability (low), S-NSSAI #3: middle probability (middle), ....

The first information may include, for each set (group) of network slices, an NSAG indicating the set and information indicating a probability that the UE 100 uses the set. For example, the first information may be information such as NSAG #1: 30%, NSAG #2: 15%, NSAG #3: 60%, ....

The UE 100 may derive the use probability of each network slice through the statistical processing (for example, maximum, minimum, or average) based on the track record of the UE 100 having used each network slice. The UE 100 may derive the use probability of each network slice by the model inference using the AI/ML model (trained model) that has been trained for the track record of the UE 100 having used each network slice.

2) Information indicating a priority of each network slice (second information): The second information may include, for each network slice, S-NSSAI indicating the network slice and information indicating the priority (order of priority) derived by the UE 100 for the network slice. For example, the first information may be information such as S-NSSAI #1: priority "3", S-NSSAI #2: priority "1", S-NSSAI #3: priority "2", ....

The second information may include, for each set (group) of network slices, an NSAG indicating the set and information indicating the priority (order of priority) derived by the UE 100 for the set. For example, the second information may be information such as NSAG #1: priority "3", NSAG #2: priority "1", NSAG #3: priority "2", ....

The UE 100 may derive the priority of each network slice through the statistical processing based on the track record of the UE 100 having used each network slice. For example, the UE 100 may calculate the use probability of each network slice by the statistical processing as described above, and then derive the priority that is higher as the calculated use probability is higher. The UE 100 may derive the priority of each network slice by the model inference using the AI/ML model (trained model) that has been trained for the track record of the UE 100 having used each network slice.

3) Information indicating a traffic pattern of each network slice (third information): The traffic pattern may be at least one selected from the group consisting of a cycle of traffic (generation cycle), a data amount of one burst (throughput), and a period of one burst (duration). The burst may be data per one transmission (or reception). The third information may be information indicating different traffic patterns for the uplink and the downlink as the traffic pattern of each network slice.

The third information may include, for each network slice, S-NSSAI indicating the network slice and information indicating the traffic pattern derived by the UE 100 for the network slice. The third information may include, for each set (group) of network slices, an NSAG indicating the set and information indicating the traffic pattern derived by the UE 100 for the set.

The UE 100 may derive the traffic pattern of each network slice through the statistical processing (for example, maximum, minimum, or average) based on the track record of the UE 100 having used each network slice. The UE 100 may derive the traffic pattern of each network slice by the model inference using the AI/ML model (trained model) that has been trained for the track record of the UE 100 having used each network slice.

In step S104, the gNB 200a determines a target cell of a handover of the UE 100 based on the slice-related information received from the UE 100 in step S103. The gNB 200a may determine the target cell by the model inference based on the slice-related information using the AI/ML model. Here, assume that the cell b is determined to be the target cell.

The gNB 200a may grasp in advance, for each candidate cell, a network slice to be supported and/or a communication volume of each network slice. Here, the candidate cell may be a cell (neighboring cell) that satisfies a predetermined radio quality criterion. The gNB 200a may determine the candidate cell based on the Measurement Report message from the UE 100. The gNB 200a may determine, based on the first information and/or the second information included in the slice-related information, a candidate cell supporting a network slice with a high use probability and/or a high priority in the UE 100 as the target cell. The gNB 200a may estimate a radio resource load (ratio) for each candidate cell based on the third information included in the slice-related information, and select a candidate cell having a communication volume that can withstand the load as the target cell.

In step S105, the gNB 200a transmits a HO Request message for requesting a handover of the UE 100 to the gNB 200b managing the cell b. The gNB 200b receives the HO Request message. The gNB 200a may transmit, to the gNB 200b, the HO Request message including at least a part of the slice-related information received from the UE 100 in step S103 and/or information indicating the radio resource load estimated based on the slice-related information.

In step S106, the gNB 200b transmits a HO Request Acknowledge message to the gNB 200a in response to receiving the HO Request message. The HO Request Acknowledge message includes configuration information (RRC configuration information) required for the UE 100 to access the target cell (cell b).

In step S107, in response to receiving the HO Request Acknowledge message in step S106, the gNB 200a transmits an RRC Reconfiguration message, as a HO command, including the RRC configuration information in the HO Request Acknowledge message to the UE 100. The UE 100 receives the HO command.

In step S108, the UE 100 performs access (connection processing) to the cell b, which is the target cell, in response to receiving the HO command of step S107. For example, the UE 100 may initiate the random access procedure for the cell b, and transmit the random access preamble to the cell b. The UE 100 may then transmit an RRC Reconfiguration Complete message to the cell b. When such connection processing is completed, the UE 100 continues communication with the cell b being a new serving cell.

Note that this operation example describes the normal handover as an example, but may be applied to a conditional handover. For example, the gNB 200a may determine one or more candidate cells based on the slice-related information from the UE 100, and configure these candidate cells together with the execution condition for handover for the UE 100 in the RRC message. When the execution condition for handover to any candidate cell is satisfied, the UE 100 may access the target cell by determining the candidate cell that the execution condition for handover is satisfied as the target cell.

### (4.2) Second Operation Example

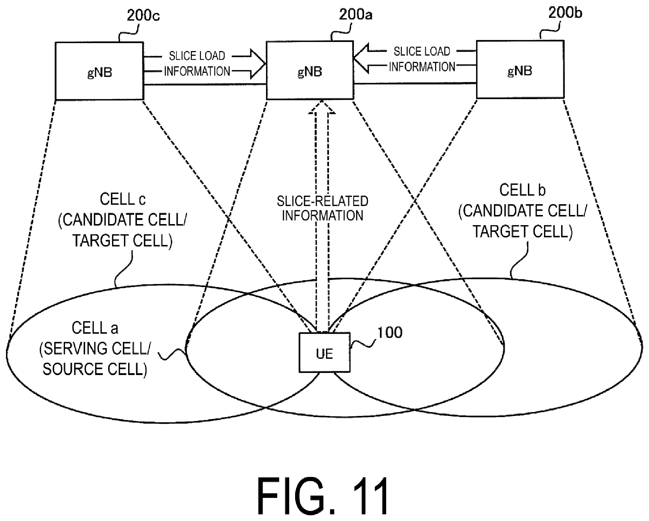

FIG. 11 is a diagram for describing the second operation pattern of the mobile communication system 1 according to the embodiment. Note that the second operation pattern may be performed in combination with the first operation pattern.

In the second operation pattern, the gNB 200a acquires, from another gNB 200 (neighboring gNB), slice load information indicating a load status of each network slice for the other gNB 200. In the illustrated example, the gNB 200a acquires the slice load information indicating the load status of each of the network slices for the gNB 200b (cell b) from the gNB 200b, and acquires the slice load information indicating the load status of each network slice related to gNB 200c (cell c) from gNB 200c. The gNB 200a performs the mobility control from the gNB 200a to the other gNB 200 (target cell) based on the acquired slice load information. For example, the gNB 200a determines a target (target cell and/or target gNB) of the handover of the UE 100 based on the acquired slice load information. The gNB 200a may predict whether the slice service is appropriately provided in the target after the handover of the UE 100, and may perform the handover of the UE 100 to the target for which the slice service is predicted to be appropriately provided.

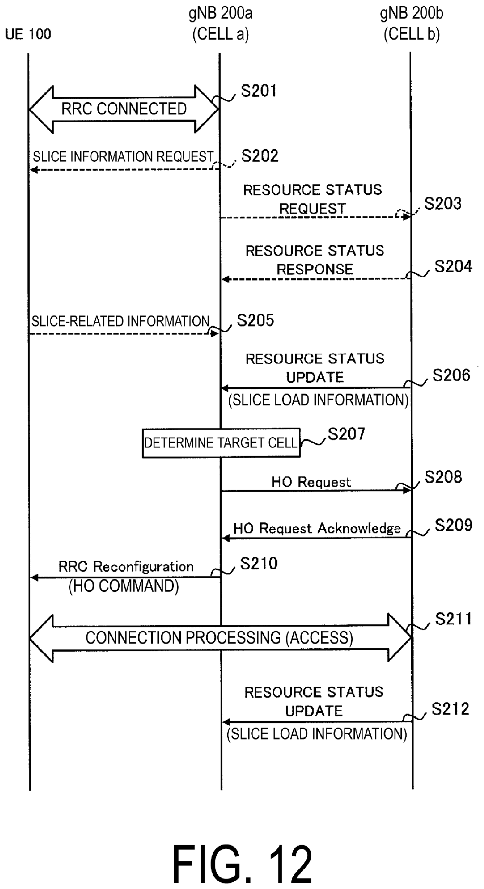

FIG. 12 is a diagram illustrating an example of the second operation pattern of the mobile communication system 1 according to the embodiment. Here, differences from the first operation pattern are mainly described.

In step S201, the UE 100 is in the RRC connected state with the cell a managed by the gNB 200a being the serving cell. The UE 100 performs wireless communication with the cell a (gNB 200a) using one or more network slices.

In step S202, the gNB 200a may transmit a slice information request to the UE 100.

In step S203, the gNB 200a may transmit a RESOURCE STATUS REQUEST message to the gNB 200b to request a report of the resource load status in the gNB 200b, which is a neighboring gNB. The RESOURCE STATUS REQUEST message may include information indicating a cell (for example, the cell b) to be reported, information for requesting to start measuring the resource load status, and information indicating a reporting cycle. In the second operation pattern, the RESOURCE STATUS REQUEST message may include information indicating a type of slice load information to be reported and/or information indicating a slice to be reported.

In step S204, the gNB 200b may transmit a RESOURCE STATUS RESPONSE message to the gNB 200a in response to receiving the RESOURCE STATUS REQUEST message in step S203, and start the measurement requested from the gNB 200a.

In step S205, the UE 100 may transmit the slice-related information to the gNB 200a.

In step S206, the gNB 200b transmits a RESOURCE STATUS UPDATE message to the gNB 200a, which contains the slice load information (information on the load for each slice). The gNB 200a receives the RESOURCE STATUS UPDATE message. The RESOURCE STATUS UPDATE message may include cell identification information indicating a cell (cell b) to be reported and the slice load information associated with the cell identification information. The slice load information includes at least one of the following pieces of information, 1) to 3).

1) Information on the number of UE 100 in the RRC connected state for each network slice (RRC connection number information):
The RRC connection number information is information on the number of RRC connections for each slice of the cell. The RRC connection number information may include a value of the number of RRC connections (integer type) for each slice of the cell and an available RRC connection capacity value for each slice of the cell. The value of the number of RRC connections (integer type) per slice of the cell may be the number of RRC connections (the number of UE 100 in the RRC connected state) in which the PDU session associated with the slice has been established. The available RRC connection capacity value for each slice of the cell is the percentage of rest of the current number of RRC connections for the slice relative to the maximum number of RRC connections supported for the slice. For example, when the maximum number of RRC connections supported for a slice #1 is 100 and the current number of RRC connections for the slice is 25, the available RRC connection capacity value is 75 [%].

For example, the RRC connection number information may be information such as S-NSSAI #1: the number of RRC connections "25" and the available RRC connection capacity 30 [%], S-NSSAI #2: the number of RRC connections "20" and the available RRC connection capacity 45 [%], ....

Note that the number of RRC connections (the number of UE 100 in the RRC connected state) may be replaced with the RRC inactive number (the number of UE 100 in the RRC inactive state), or may be the sum of the RRC connection number and the RRC inactive number.

2) Information on the number of UE 100 that are in the RRC connected state and are active for each network slice (active UE number information):
The active UE number information may be an average value (integer type) of the active UE number for each slice of the cell. The number of active UE may be UE that have data available for transmission. The active UE number information may be, for example, information such as S-NSSAI #1: the number of active UE "25", S-NSSAI #2: the number of active UE "20", ....

3) Information on the communication load (use resource amount) per one UE for each network slice:
The information may be an average of resources (load) consumed per one UE for each slice of the cell. For example, the information may be an integer type (0 to 100), and may be information indicating that the (average) resource consumed per one UE is 2% with respect to the total capacities of the slice. The information may be, for example, information such as S-NSSAI #1: average use resources per one UE 2 [%], S-NSSAI #2: average use resources per one UE 5 [%].

In step S207, the gNB 200a determines whether to determine the cell b as a target cell based on the slice load information received from the gNB 200a in step S206. For example, the gNB 200a determines as the target cell a candidate cell supporting the network slice that is being used by the UE 100 and having a low load of the network slice. The gNB 200 may determine the target cell further based on the slice-related information received from the UE 100 in step S205. For example, the gNB 200a may estimate a load increase (the amount of resources consumed by the UE 100) for each slice of each candidate cell after the handover of the UE 100 using the model inference by the AI/ML model, and determine a candidate cell with the lowest estimated load as the target cell.

In step S208, the gNB 200a transmits a HO Request message for requesting a handover of the UE 100 to the gNB 200b managing the cell b. The gNB 200b receives the HO Request message. The gNB 200a may transmit, to the gNB 200b, the HO Request message including at least a part of the slice-related information received from the UE 100 in step S205 and/or information indicating the load estimated in step S207.

In step S209, the gNB 200b transmits a HO Request Acknowledge message to the gNB 200a in response to receiving the HO Request message. The HO Request Acknowledge message includes configuration information (RRC configuration information) required for the UE 100 to access the target cell (cell b).

In step S210, in response to receiving the HO Request Acknowledge message in step S209, the gNB 200a transmits an RRC Reconfiguration message, as a HO command, including the RRC configuration information in the HO Request Acknowledge message to the UE 100. The UE 100 receives the HO command.

In step S211, the UE 100 performs access (connection processing) to the cell b, which is the target cell, in response to receiving the HO command of step S107. For example, the UE 100 may initiate the random access procedure for the cell b, and transmit the random access preamble to the cell b. The UE 100 may then transmit an RRC Reconfiguration Complete message to the cell b. When such connection processing is completed, the UE 100 continues communication with the cell b being a new serving cell.

In step S212, the gNB 200b may transmit a RESOURCE STATUS UPDATE message to the gNB 200a, which contains the slice load information (information on the load for each slice). The RESOURCE STATUS UPDATE message of the step S212 may include information on a load variation amount of the gNB 200b (cell b) due to the handed over UE 100, in addition to or instead of the information in the RESOURCE STATUS UPDATE message of step S206. The information includes at least one of the following pieces of information, 1) and 2). The gNB 200a may use the information in the RESOURCE STATUS UPDATE message of the step S212 to perform model training of the AI/ML model.
1) Information indicating an amount of resources (load) consumed for each slice for the handed over UE 100:
   The information may be information indicating for each slice the amount of resources (load) consumed in the cell b by the UE 100 after the handover.
2) Information on the estimated load and the actual load transmitted in step S208: The information may be a difference between these loads. The information may be information indicating whether the estimation is correct.

Note that this operation example describes the normal handover as an example, but may be applied to a conditional handover. For example, the gNB 200a may determine one or more candidate cells based on the slice load information from the neighboring gNB, and configure these candidate cells together with the execution condition for handover for the UE 100 in the RRC message. When the execution condition for handover to any candidate cell is satisfied, the UE 100 may access the target cell by determining the candidate cell that the execution condition for handover is satisfied as the target cell.

### (5) Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

In the above-described embodiment, an example in which the base station is an NR base station (gNB) has been described, but the base station may be an LTE base station (eNB). The base station may be a relay node such as an Integrated Access and Backhaul (IAB) node. The base station may be a distributed unit (DU) of the IAB node. The user equipment (terminal apparatus) may be a relay node such as an IAB node or a Mobile Termination (MT) of the IAB node.

In other words, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may be a combination of at least a part of the apparatus of the core network and at least a part of the base station.

A program causing a computer to execute each piece of the processing performed by the communication apparatus (e.g., UE 100 or gNB 200) may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for performing each piece of processing performed by the communication apparatus may be integrated, and at least part of the communication apparatus may be configured as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

As used in this disclosure, the terms "based on" and "depending on" do not mean "based only on" or "depending only on", unless otherwise specified. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

The present application claims priority to Japanese Patent Application No. 2023-133595 (filed on August 18, 2023), the contents of which are incorporated herein by reference in its entirety.

### (6) Supplementary Notes

Features relating to the embodiments described above are described below as supplementary notes.

### Supplementary Note 1

A communication method used in a mobile communication system, the communication method including:
performing, at a user equipment, wireless communication with a network node using one or more network slices; and
transmitting, at the user equipment, slice-related information used for performing mobility control of the user equipment to the network node,
wherein the slice-related information includes at least one selected from the group consisting of first information indicating a use probability of each of the network slices, second information indicating a priority of each of the network slices, and third information indicating a traffic pattern of each of the network slices.

### Supplementary Note 2

The communication method according to supplementary note 1, further including receiving, at the user equipment, signaling for requesting or configuring transmission of the slice-related information from the network node,
wherein the transmitting of the slice-related information includes transmitting the slice-related information to the network node in response to the signaling.

### Supplementary Note 3

The communication method according to supplementary note 1 or 2, further including: deriving, at the user equipment, at least one selected from the group consisting of the first information, the second information, and the third information by statistical processing based on a track record of the user equipment having used each of the network slices.

### Supplementary Note 4

The communication method according to any one of supplementary notes 1 to 3, further including:
deriving, at the user equipment, at least one selected from the group consisting of the first information, the second information, and the third information by inference processing based on a track record of the user equipment having used each of the network slices by using an artificial intelligence or machine learning (AI/ML) model.

### Supplementary Note 5

The communication method according to any one of supplementary notes 1 to 4, wherein at least one selected from the group consisting of the first information, the second information, or the third information is information in a Single Network Slice Selection Assistance Information (S-NSSAI) unit or information in a Network Slice AS Group (NSAG) unit.

### Supplementary Note 6

The communication method according to any one of supplementary notes 1 to 5, further including:
receiving, at the network node, the slice-related information from the user equipment;
acquiring, at the network node, slice load information that is obtained from another network node and indicates a load status of each of the network slices for the other network node; and performing, at the network node, the mobility control from the network node to the other network node based on the slice-related information and the slice load information.

### Supplementary Note 7

The communication method according to supplementary note 6, wherein
the slice load information includes information on the number of user equipments in a radio resource control (RRC) connected state for each network slice.

### Supplementary Note 8

The communication method according to supplementary note 6 or 7, wherein
the slice load information includes information on the number of user equipments that are in a radio resource control (RRC) connected state and are active for each network slice.

### Supplementary Note 9

The communication method according to any one of supplementary notes 6 to 8, wherein
the slice load information includes information on a communication load for each of the network slices per user equipment.

### Supplementary Note 10

The communication method according to any one of supplementary notes 6 to 9, wherein
the performing the mobility control includes determining a target of a handover of the user equipment based on the slice-related information and the slice load information.

### Supplementary Note 11

A user equipment used in a mobile communication system, the user equipment including:
a controller configured to perform wireless communication with a network node using one or more network slices; and
a transmitter configured to transmit slice-related information used for performing mobility control of the user equipment to the network node,
wherein the slice-related information includes at least one selected from the group consisting of first information indicating a use probability of each of the network slices, second information indicating a priority of each of the network slices, and third information indicating a traffic pattern of each of the network slices.

### Supplementary Note 12

A network node used in a mobile communication system, the network node including:
a controller configured to perform wireless communication with a user equipment using one or more network slices; and
a receiver configured to receive, from the user equipment, slice-related information used for performing mobility control of the user equipment,
wherein the slice-related information includes at least one selected from the group consisting of first information indicating a use probability of each of the network slices, second information indicating a priority of each of the network slices, and third information indicating a traffic pattern of each of the network slices.

### Supplementary Note 13

A network node used in a mobile communication system, the network node including:
a communicator configured to transmit slice load information indicating a load status of each of the network slices to another network node,
wherein the slice load information includes at least one selected from the group consisting of information on the number of user equipments in a radio resource control (RRC) connected state, information on the number of user equipments that are in the radio resource control (RRC) connected state and are active, and information on a communication load for each of the network slices per user equipment.

### REFERENCE SIGNS

1: Mobile communication system
5: Network
10: RAN (NG-RAN)
20: CN (5GC)
100: UE
110: Receiver
120: Transmitter
130: Controller
200: gNB
210: Transmitter
220: Receiver
230: Controller
240: Backhaul communicator
A1: Data collector
A2: Model training unit
A3: Model inference unit
A4: Data processor

## Claims

1. A communication method used in a mobile communication system, the communication method comprising:
performing, at a user equipment, wireless communication with a network node using one or more network slices; and
transmitting, at the user equipment, slice-related information used for performing mobility control of the user equipment to the network node,
wherein the slice-related information includes at least one selected from the group consisting of first information indicating a use probability of each of the network slices, second information indicating a priority of each of the network slices, and third information indicating a traffic pattern of each of the network slices.

2. The communication method according to claim 1, further comprising
receiving, at the user equipment, signaling for requesting or configuring transmission of the slice-related information from the network node,
wherein the transmitting of the slice-related information includes transmitting the slice-related information to the network node in response to the signaling.

3. The communication method according to claim 1, further comprising
deriving, at the user equipment, at least one selected from the group consisting of the first information, the second information, and the third information by statistical processing based on a track record of the user equipment having used each of the network slices.

4. The communication method according to claim 1, further comprising
deriving, at the user equipment, at least one selected from the group consisting of the first information, the second information, and the third information by inference processing based on a track record of the user equipment having used each of the network slices by using an artificial intelligence or machine learning (AI/ML) model.

5. The communication method according to any one of claims 1 to 4, wherein at least one selected from the group consisting of the first information, the second information, and the third information is information in a Single Network Slice Selection Assistance Information (S-NSSAI) unit or information in a Network Slice AS Group (NSAG) unit.

6. The communication method according to claim 1, further comprising:
receiving, at the network node, the slice-related information from the user equipment;
acquiring, at the network node, slice load information that is obtained from another network node and indicates a load status of each of the network slices for the other network node; and
performing, at the network node, the mobility control from the network node to the other network node based on the slice-related information and the slice load information.

7. The communication method according to claim 6, wherein the slice load information includes information on the number of user equipments in a radio resource control (RRC) connected state for each network slice.

8. The communication method according to claim 6, wherein the slice load information includes information on the number of user equipments that are in a radio resource control (RRC) connected state and are active for each network slice.

9. The communication method according to claim 6, wherein the slice load information includes information on a communication load for each of the network slices per user equipment.

10. The communication method according to claim 6, wherein the performing the mobility control comprises determining a target of a handover of the user equipment based on the slice-related information and the slice load information.

11. A user equipment used in a mobile communication system, the user equipment comprising:
a controller configured to perform wireless communication with a network node using one or more network slices; and
a transmitter configured to transmit slice-related information used for performing mobility control of the user equipment to the network node,
wherein the slice-related information includes at least one selected from the group consisting of first information indicating a use probability of each of the network slices, second information indicating a priority of each of the network slices, and third information indicating a traffic pattern of each of the network slices.

12. A network node used in a mobile communication system, the network node comprising:
a controller configured to perform wireless communication with a user equipment using one or more network slices; and
a receiver configured to receive, from the user equipment, slice-related information used for performing mobility control of the user equipment,
wherein the slice-related information includes at least one selected from the group consisting of first information indicating a use probability of each of the network slices, second information indicating a priority of each of the network slices, and third information indicating a traffic pattern of each of the network slices.

13. A network node used in a mobile communication system, the network node comprising:
a communicator configured to transmit slice load information indicating a load status of each of the network slices to another network node,
wherein the slice load information includes at least one selected from the group consisting of information on the number of user equipments in a radio resource control (RRC) connected state, information on the number of user equipments that are in the radio resource control (RRC) connected state and are active, and information on a communication load for each of the network slices per user equipment.
